# EUROPEAN PATENT APPLICATION

(11) **EP 2 540 467 A1**
(43) Date of publication of application: **02.01.2013**
(21) Application number: 10846643.4
(22) Date of filing: 16.12.2010
(51) Int. Cl.: B29B 15/12

(54) **PREFORM AND METHOD FOR MANUFACTURING THE SAME**

(30) Priority: 23.02.2010 JP 2010036976
(71) Applicant: Toray Industries, Inc., Tokyo 103-8666 (JP)
(72) Inventor: YAMASAKI Masaaki, Nagoya-shi Aichi 455-8502 (JP); HINO Toyokazu, Nagoya-shi Aichi 455-8502 (JP); TSUJI Seiji, Nagoya-shi Aichi 455-8502 (JP)
(74) Representative: Hoefer & Partner
(86) International application number: PCT/JP2010/072619
(87) International publication number: WO 2011/104980

(57) **Abstract**

Disclosed are a method for manufacturing a preform and a preform manufactured by the method, wherein a plurality of substrates to which a binder has been affixed are laminated to form a laminate and a forming die is used to form the laminate, thereby manufacturing a preform which is a precursor in resin transfer molding (RTM) of fiber reinforced plastic (FRP). During the manufacturing the laminate is pressed into a predetermined shape by the forming die, the binder is melted by directly heating the binder of the substrates in the laminate being pressed or both and is cooled thereafter to solidify the binder, and the substrates are adhered between layers thereof to retain the formed shape of the preform. A preform which is an FRP molding precursor when RTM is performed can be efficiently formed into a predetermined shape with a short forming cycle time and low energy consumption, and a desired preform can be manufactured with excellent productivity.

## Description

### Technical Field of the Invention

The present invention relates to a method for manufacturing a preform prepared by laminating a plurality of reinforcing fiber substrates, suitable for use particularly in RTM (Resin Transfer Molding) process, and a preform manufactured by the method.

### Background Art of the Invention

As a process for molding a fiber reinforced plastic (FRP), which is excellent in productivity, so-called RTM process is known wherein substrates each comprising a dry reinforcing fiber fabric are placed in a molding die, a matrix resin is injected into the die to be impregnated into the reinforcing fiber substrates, and after the resin is cured, a molded product is taken out from the die. In case where a relatively large-sized molded product or thick molded product is produced, as an efficient molding process, a molding process is frequently employed wherein a reinforcing fiber substrate (for example, a plurality of reinforcing fiber substrates) is formed into a predetermined shape to prepare a preform of reinforcing fiber substrate which is a precursor for molding of an FRP, the preform is placed in a molding die, a matrix resin is injected into the die, and the resin impregnated into the substrate is cured.

In preparation of the preform used in such a RTM process, conventionally, for example, such a series of steps are employed that (1) a plurality of substrates laminated are placed in a forming die, and the forming die is closed to give a predetermined shape to the substrates by the forming die, (2) the forming die is heated (or heated in advance), the substrates are heated indirectly, and a binder interposed between the substrates is softened or melted, (3) while the shape of the preform is retained by the forming die, the preform is cooled, and the binder is solidified to adhere the substrates between layers thereof, (4) the formed preform is taken out from the forming die. In such a series of steps, as a method for heating the forming die at the above-described step (2), a method of heating due to a heat medium, electric heater, etc. is employed, and as a method of cooling at the above-described step (3), a method of cooling due to air (room temperature, cooling), cooling water, etc. is employed.

However, relatively to the whole of such a forming die (generally, a metal mold), in the method for repeating heating and cooling, the time required for one cycle is long. Further, the energy consumption required for the heating is great. Further, as to the method for heating and cooling the metal mold, although a method for heating only a surface of the metal mold is known (for example, Patent document 1), even if it is heating of the surface of the metal mold, because there is a thermal transfer, there also remains a problem of great energy consumption.

### Prior art documents

### Patent documents

Patent document 1: JP-A-2009-507674

### Summary of the Invention

### Problems to be solved by the Invention

As described above, when a preform with a predetermined shape is formed, in case of employing a conventional general method for heating the whole of a metal mold, there are problems that it takes a long time for heating and cooling cycle and that the energy consumption is great, and even in case of employing a method for heating a surface of a metal mold, there is a problem that the thermal transfer is great and the energy consumption is great. From these points, in the conventional technologies as they are, it becomes difficult to deal with a mass production in which the forming of a preform having a predetermined shape is required successively.

Accordingly, paying attention to the present status of the above-described conventional technologies, an object of the present invention is to provide a method for manufacturing a preform excellent in productivity which can perform forming of a preform with a predetermined shape, which is a precursor for molding of FRP when RTM process is carried out, at a short forming cycle time and at a small energy consumption, and a preform manufactured by the method.

### Means for solving the Problems

To achieve the above objects, a method for manufacturing a preform according to the present invention is a method wherein a plurality of substrates each prepared by affixing a binder whose main component is a thermoplastic resin to a reinforcing fiber fabric are laminated to form a laminate, and a preform which is a molding precursor of FRP is prepared by forming the laminate using a forming die, the preform being used in RTM process for placing the preform in a molding die, injecting a resin into the molding die, thereafter curing the resin, and obtaining an FRP molded product by opening the molding die, and is characterized in that the laminate is pressed into a predetermined shape by the forming die, the binder is melted by directly heating the binder or the substrates or both in the laminate at a condition being pressed, and is cooled thereafter to solidify the binder, and the substrates are adhered to each other between layers thereof to retain a formed shape of the preform.

Namely, in the method for manufacturing a preform according to the present invention, the whole of or the surface of a metal mold as a forming die is not an object for heating, but the laminate of reinforcing fiber substrates placed in the forming die is an object for heating, and by directly heating the reinforcing fiber substrates, a preform having a predetermined shape is made. Thus, by setting only the reinforcing fiber substrates in the forming die as an object for heating, as compared with a case where a metal mold as a forming die is heated, it becomes possible to heat, and further to cool, in a short period of time, and it becomes possible to shorten the forming cycle time. Further, because the whole of a metal mold having a large heat capacity is not an object for heating, it becomes possible to suppress the energy consumption required for predetermined heating to be small. Therefore, the binder at the surface can be melted by directly heating the reinforcing fiber substrates and elevating the temperature of the reinforcing fiber substrates to a predetermined temperature in a short period of time, and by lowering the temperature by cooling quickly after the completion of the heating, the substrates are adhered to each other between layers thereof and a preform with a predetermined shape can be efficiently manufactured at a short forming cycle time and at a small energy consumption, and the productivity may be greatly improved.

In such a method for manufacturing a preform according to the present invention, as the method for directly heating the binder or the substrates or both in the laminate, a method due to electromagnetic induction can be employed. For example, the substrates have a conductivity, and the substrates can be directly heated by electromagnetic induction. Namely, the substrates having a conductivity are heated by induction, and when the binder is melted by temperature elevation, the heating is finished and the temperature is quickly lowered. Further, a method can be employed wherein the substrates contain fibers having a conductivity, and the substrates are directly heated by electromagnetic induction. As the fibers having a conductivity, in particular, carbon fibers can be used. Namely, the substrates whose reinforcing fibers have a conductivity are heated by induction, and when the binder is melted by temperature elevation, the heating is finished and the temperature is quickly lowered. Alternatively, a method can also be employed wherein the binder has a conductivity, and the binder is directly heated by electromagnetic induction. Namely, the binder is given with a conductivity so as to be easily heated by induction, and by heating the binder by induction, the substrates are adhered to each other via the binder, the heating is finished, and the temperature is quickly lowered. Thus, by employing a heating method due to electromagnetic induction, without setting a metal mold as a forming die as an object for heating, it becomes possible to target the substrates, fibers forming the substrates or the binder as an object for heating and to directly heat the object for heating, thereby manufacturing a desired preform efficiently at a short forming cycle time and at a small energy consumption.

In such a heating method due to electromagnetic induction, because a metal mold is not an object for heating, it becomes unnecessary to use a metal mold as the forming die, and a forming die comprising a non-conductive material, for example, a forming die comprising a non-metal, can be used. Thus, by using a forming die comprising a non-conductive material, the forming die can be positively taken off from the object for heating at the time of heating due to electromagnetic induction, and by setting only the above-described reinforcing fiber substrates, the fibers forming the substrates or the binder as the object for heating, efficient heating relative to these object for heating can be performed.

For the above-described heating by electromagnetic induction, basically a coil for electromagnetic induction may be used, and an adequate magnetic field may be formed by flowing a necessary current in the coil and the above-described object for heating in the present invention in the magnetic field may be heated. The coil for electromagnetic induction may be provided separately from the forming die, and a forming die provided with the coil for electromagnetic induction may also be used.

In case where a coil for electromagnetic induction is used, it is preferred that a distance between a center of the coil and the laminate is in a range of 5 mm to 30 mm. In case where the distance between the center of the coil and the laminate is less than 5 mm, in addition that there is a fear that an adequate control for heating becomes difficult, because the surface layer portion of the forming die is very thin and it must be rigid, there is a fear that preparation of such a formation becomes diffi cult. On the contrary, in case where the above-described distance exceeds 30 mm, because the magnetic field from the coil bringing about heating by induction is not sufficiently delivered and in order to deliver that, an oscillator having a large output is required, and such a condition is not preferred.

Further, it is preferred that a distance between centers of coil portions adjacent to each other in a part performed with the above-described heating by electromagnetic induction of the coil (namely, a coil pitch) is in a range of 5 mm to 60 mm. In case where this coil pitch is less than 5 mm, there is a fear that the laminate at a position between coil portions is excessively heated concentrically and the surface layer portion of the forming die may be damaged. In case where the coil pitch exceeds 60 mm, similarly as aforementioned, because the magnetic field from the coil bringing about heating by induction is not sufficiently delivered and in order to deliver that, an oscillator having a large output is required, and such a condition is not preferred.

Further, in the method for manufacturing a preform according to the present invention, it is preferred that a glass transition temperature (Tg) of the above-described binder is in a range of 50 to 80°C. In case where Tg of the binder is lower than 50°C, there is a fear that the handling ability may deteriorate such as sticking of substrates to each other at the time of transportation of substrates. On the contrary, in case where it exceeds 80°C, because the forming temperature must be further elevated, the time for heating becomes long, the time for forming becomes longer, and in addition, it is also necessary to increase the heat resisting temperature of the die, and such a condition is not preferred.

Further, in case where the heating by electromagnetic induction is performed, it is preferred that at least one of an upper die and a lower die of the above-described forming die is formed from at least three separable members comprising a surface layer portion which is positioned at the side of the laminate, a coil for electromagnetic induction which is disposed at a back surface side of the surface layer portion, and a base portion. By separating the die into the surface layer portion, the coil and the base portion, for example, only the surface layer portion can be exchanged when the laminate is excessively heated, the maintenance becomes easy as compared with a case of a die where the coil is embedded.

In this case, it is preferred that the base portion of the above-described forming die is made of a material having a heat resisting temperature higher than that of the surface layer portion of the forming die. Namely, by setting the heat resisting temperature of the base portion, which supports the surface layer portion, higher, the formation of the forming die can be maintained at a predetermined formation, and the surface layer portion can be securely supported at a desired figure.

Further, it is preferred that the base portion of the forming die is made of a material having a heat resisting temperature of 200°C or higher. Namely, for example, in case where the heating is supposed to be performed at a temperature in a range of 100°C to 150°C, a sufficiently high heat resistance relative to this heating temperature is given to the base portion of the forming die.

Further, in the method for manufacturing a preform according to the present invention, when the preform is prepared, after the above-described laminate is heated, the binder can be solidified by cooling the laminate by the forming die. Namely, as described above, the forming die substantially is not used at the time of heating, and cooling due to the forming die is positively employed at the time of cooling. Because the forming die is not positively heated at the time of heating, the forming die does not reach a high temperature, and it is maintained at a relatively low temperature, and therefore, it becomes possible to utilize such a forming die for a predetermined cooling without consuming a great energy. In other words, it is a method for using the forming die for press forming into a predetermined shape, and for positively and exclusively using it for cooling after heating substantially without using it for heating.

In such a cooling by the forming die, for example, a method can be employed wherein a forming surface of the forming die is cooled by communicating a cooling medium in the forming die, and the laminate is cooled via cooling of the forming surface. In such a method, an efficient cooling becomes possible by setting the forming surface side as an object for cooling, namely, by setting the laminate having a binder to be cooled as an object for cooling, and the time for cooling can be shortened as well as the amount of energy consumption required for cooling can be reduced.

Further, in the method for manufacturing a preform according to the present invention, the above-described cooling of the laminate can be performed at a condition being pressed. By performing the cooling at a condition being pressed, a preform having a high dimensional accuracy can be obtained. On the contrary, if the cooling is performed at a condition of opening the press, the binder is solidified at an open system, and depending upon cooling means, there is a fear that a target preform cannot be obtained by a reason such as expansion of substrate.

Furthermore, in the method for manufacturing a preform according to the present invention, it is possible to employ a method wherein at least one of an upper die and a lower die of the forming die is formed into divided dies, and each divided die is controlled with heating or cooling or both. In such a method, since most efficient heating and cooling relative to the respective portions of the laminate to be heated and cooled become possible, further shortening of forming cycle time and reduction of energy consumption become possible.

Still further, in the method for manufacturing a preform according to the present invention, as the method for directly heating the binder or the substrates or both in the laminate, a method can also be employed wherein a forming die attached with a ultrasonic vibration device is used, and the binder is melted by ultrasonically vibrating the binder or the substrates or both by the ultrasonic vibration device. Namely, using ultrasonic vibration, the binder itself or the substrate affixed with the binder is elevated in temperature relatively momentarily, the vibration is stopped when the binder has been melted and the substrates have been adhered to each other, and the temperature lowering and the binding are performed. For example, it becomes possible to heat and melt the binder by ultrasonically vibrating the binder itself having a form such as particles, or by ultrasonically vibrating the substrates and vibrating the binder contacted with the substrates, or by bringing the vibrated substrates and binder into contact with each other. Since such a ultrasonic vibration device has a ultrasonic oscillator, and an oscillating end of the ultrasonic oscillator may be directed toward the laminate. Also by such a heating method due to ultrasonic vibration, it becomes possible to target the substrates, fibers forming the substrates or the binder as an object for heating and to directly heat the object for heating, thereby manufacturing a desired preform efficiently at a short forming cycle time and at a small energy consumption.

A preform according to the present invention is one manufactured using the above-described method.

### Effect according to the Invention

Thus, by the method for manufacturing a preform according to the present invention, it becomes possible to form a preform, which is a molding precursor of FRP when RTM process is carried out, into a predetermined shape efficiently at a short forming cycle time and at a small energy consumption, and a desired preform can be manufactured with excellent productivity.

### Brief explanation of the drawings

[Fig. 1] Fig. 1 is a schematic explanation diagram showing the whole of RTM process.
[Fig. 2] Fig. 2 is a schematic perspective view showing an example of heating embodiment of a laminate in a method for manufacturing a preform according to the present invention.
[Fig. 3] Fig. 3 is a schematic perspective view showing another example of heating embodiment of a laminate in a method for manufacturing a preform according to the present invention.
[Fig. 4] Fig. 4 is a schematic sectional view of the heating embodiment depicted in Fig. 3.
[Fig. 5] Fig. 5 is a schematic perspective view showing a further example of heating embodiment of a laminate in a method for manufacturing a preform according to the present invention.
[Fig. 6] Fig. 6 is a schematic sectional view of the heating embodiment depicted in Fig. 5.
[Fig. 7] Fig. 7 is a schematic sectional view showing a still further example of heating embodiment of a laminate in a method for manufacturing a preform according to the present invention.
[Fig. 8] Fig. 8 is a schematic perspective view showing a still further example of heating embodiment of a laminate in a.method for manufacturing a preform according to the present invention.
[Fig. 9] Fig. 9 is a schematic sectional view showing a still further example of heating embodiment of a laminate in a method for manufacturing a preform according to the present invention.
[Fig. 10] Fig. 10 is a schematic sectional view showing a still further example of heating embodiment of a laminate in a method for manufacturing a preform according to the present invention.
[Fig. 11] Fig. 11 is a schematic sectional view showing a still further example of heating embodiment of a laminate in a method for manufacturing a preform according to the present invention.
[Fig. 12] Fig. 12 is a schematic sectional view showing an example of cooling embodiment of a laminate in a method for manufacturing a preform according to the present invention.

### Embodiments for carrying out the Invention

Hereinafter, desirable embodiments of the present invention will be explained referring to figures.

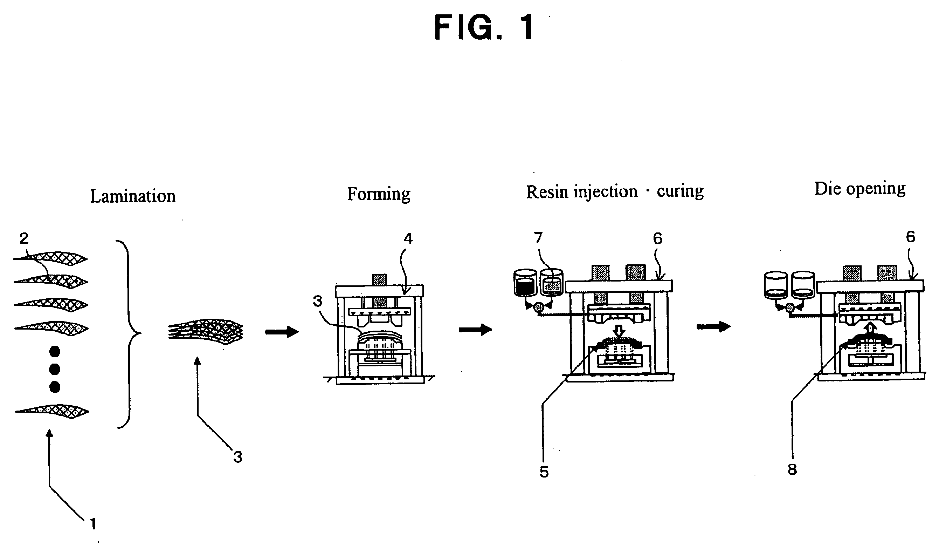

Fig. 1 schematically shows the whole of RTM process and location of a forming step of a preform according to the present invention in the whole process. In Fig. 1, symbol 1 indicates a substrate prepared by affixing a binder 2 whose main component is a thermoplastic resin to a reinforcing fiber fabric (hereinafter, also called as a reinforcing fiber substrate), and a plurality of reinforcing fiber substrates 1 are laminated to form a laminate 3. This laminate 3 is placed in a forming die 4 (laminate 3 may be formed by laminating substrates 1 in forming die 4), and using the forming die 4, a preform 5 having a predetermined shape, which is a molding precursor of FRP, is formed. Preform 5 formed into a predetermined shape is placed in a molding die 6 for RTM process, and after a resin 7 is injected, the resin is cured. An FRP molded product 8 formed by the curing of the resin is taken out from molding die 6.

When such a preform used in RTM process is manufacture, the following method is employed. Laminate 3 is pressed into a predetermined shape in molding die 4, binder 2 is melted by directly heating the binder 2 or substrates 1 or both in laminate 3 at the condition being pressed, and thereafter, cooled to solidify the binder 2, and whereby the substrates 1 are adhered to each other between layers thereof to retain the predetermined formed shape of the preform 5.

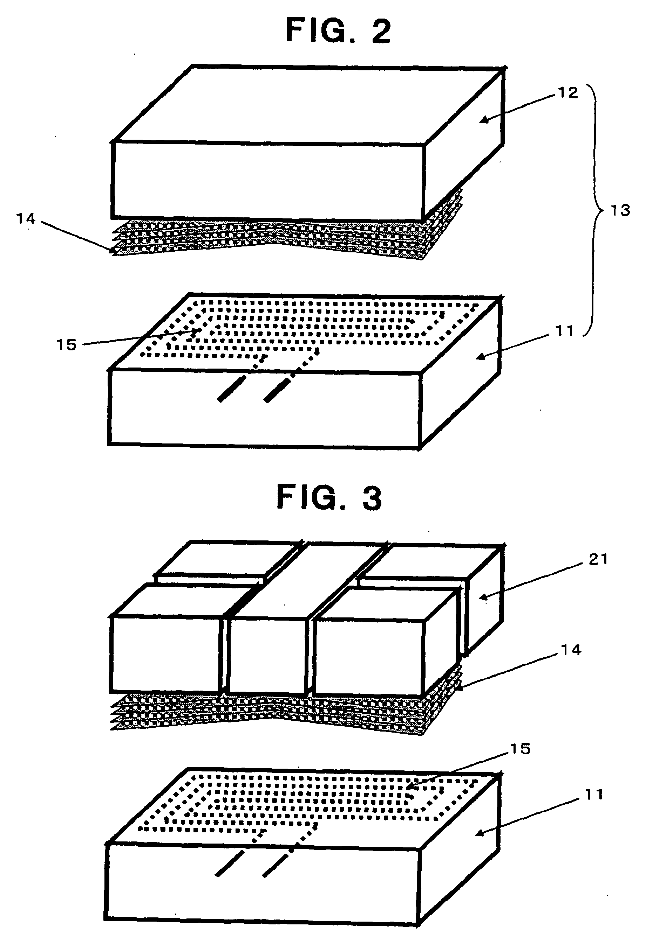

As described above, binder 2 is melted by directly heating the binder 2 or substrates 1 or both in laminate 3, and in this heating, the following various methods can be employed. The respective embodiments will be explained referring to Figs. 2-11.

In the embodiment shown in Fig. 2, laminate 14 is placed at a predetermined position in forming die 13 comprising lower die 11 and upper die 12 and formed by pressing, and at a condition being pressed, a predetermined current is flown through a coil for electromagnetic induction 15 provided to lower die 11, and binder 2 is melted by directly heating the binder 2 or substrates 1 or both in the laminate 14 by electromagnetic induction at a condition where only the laminate 14 is targeted for heating.

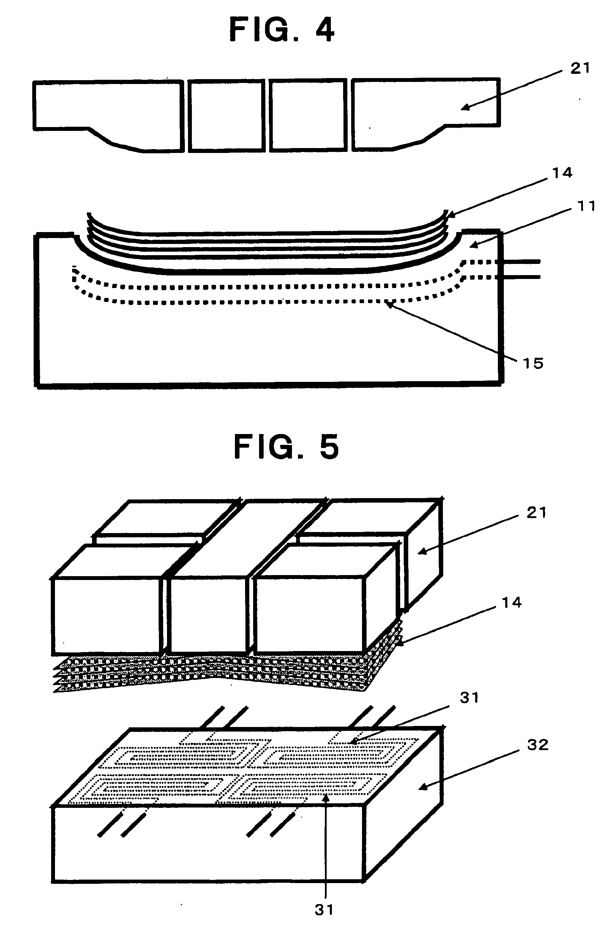

In the embodiment shown in Figs. 3 and 4, as compared with the embodiment shown in Fig. 2, the upper die is formed into divided upper dies 21, and the respective divided upper dies 21, as needed (for example, in accordance with a shape of a preform to be formed, a lamination form of substrates, etc.), are pressed successively, or are collectively operated together. Other structures are based upon those shown in Fig. 2.

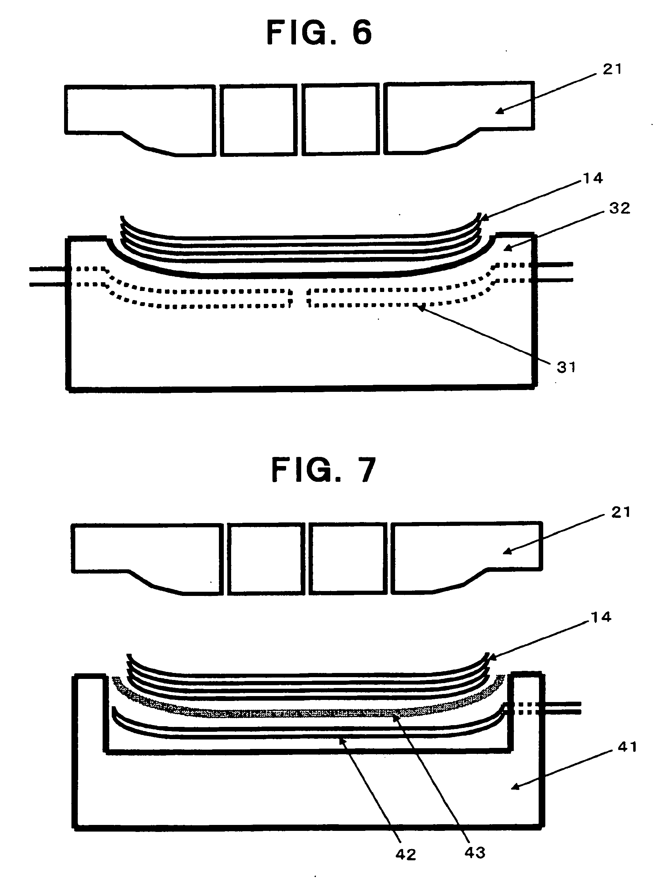

In the embodiment shown in Figs. 5 and 6, as compared with the embodiment shown in Figs. 3 and 4, a plurality of coils for electromagnetic induction 31 are embedded in lower die 32, and the current can be controlled for a wire of each coil 31. In such a structure, in accordance with respective portions of laminate 14 becoming respective targets for heating (for example, in accordance with the thickness of each portion, the number of lamination or density of disposition of substrates, the distribution of binder 2, etc.), the amount of heating can be controlled, thereby achieving a more desirable heating condition as the whole of laminate 14. Other structures are based upon those shown in Figs. 3 and 4.

In the embodiment shown in Fig. 7, as compared with the embodiment shown in Figs. 2 to 6, coil for electromagnetic induction 42 is not embedded in lower die 41, and it is provided on the lower die 41 as coil 42 given to the lower die 41. Then, in order to avoid direct contact of coil 42 with laminate 14, a plate for forming 43 is interposed between the coil 42 and laminate 14, and at a condition interposed with plate for forming 43, forming by pressing and heating of laminate 14 are carried out. In such a structure, the maintenance of coil 42 can be facilitated, and it becomes possible to easily deal with forming into various shapes by appropriately exchanging plate for forming 43. Other structures are based upon those shown in Figs. 3 and 4.

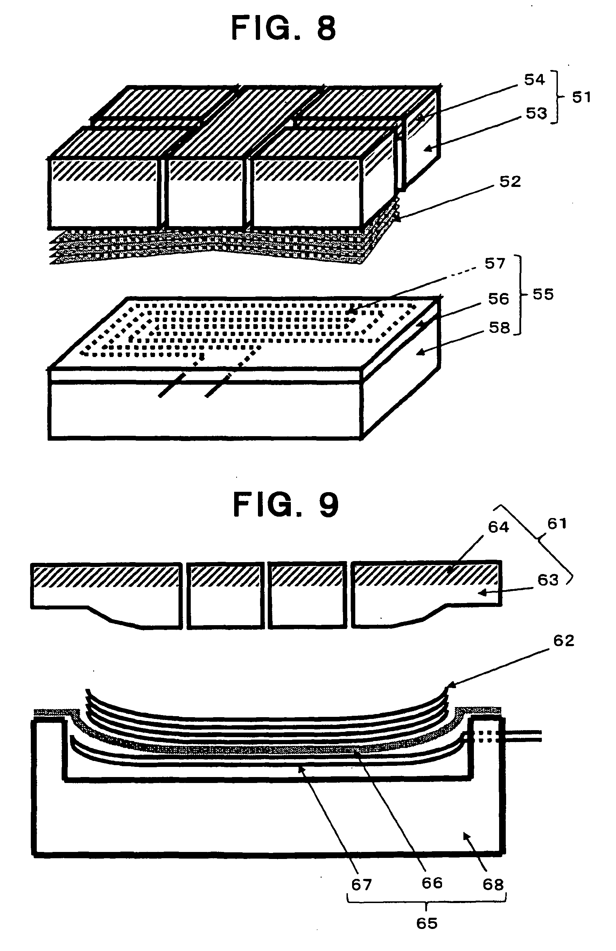

In the embodiment shown in Fig. 8, upper die 51 is formed from separable members comprising a surface layer portion 53 which is positioned at the side of laminate 52 and a base portion 54 which is disposed at the back surface side of the surface layer portion, and lower die 55 is formed from three separable members comprising a surface layer portion 56 which is positioned at the side of laminate 52, and a coil for electromagnetic induction 57 which is disposed at the back surface side of the surface layer portion, and a base portion 58 which is disposed at the back surface side of the coil. Because the surface layer portions 53 and 56 are constructed from separable members, they can be easily exchanged as needed. In particular, because lower die 55 is formed from separable members comprising surface layer portion 56, coil 57 and base portion 58, for example, in case where laminate 52 is excessively heated, only surface layer portion 56 can be exchanged, and the maintenance is facilitated as compared with the case of a die wherein a coil is embedded.

Also in the embodiment shown in Fig. 9, upper die 61 is formed from separable members comprising a surface layer portion 63 which is positioned at the side of laminate 62 and a base portion 64 which is disposed at the back surface side of the surface layer portion, and lower die 65 is formed from three separable members comprising a surface layer portion 66 which is positioned at the side of laminate 62, and a coil for electromagnetic induction 67 which is disposed at the back surface side of the surface layer portion, and a base portion 68 which is disposed at the back surface side of the coil. Because the surface layer portions 63 and 66 are constructed from separable members, they can be easily exchanged as needed. In particular, because lower die 65 is formed from separable members comprising surface layer portion 66, coil 67 and base portion 68, only surface layer portion 66 can be exchanged as needed, and the maintenance is facilitated as compared with the case of a die wherein a coil is embedded.

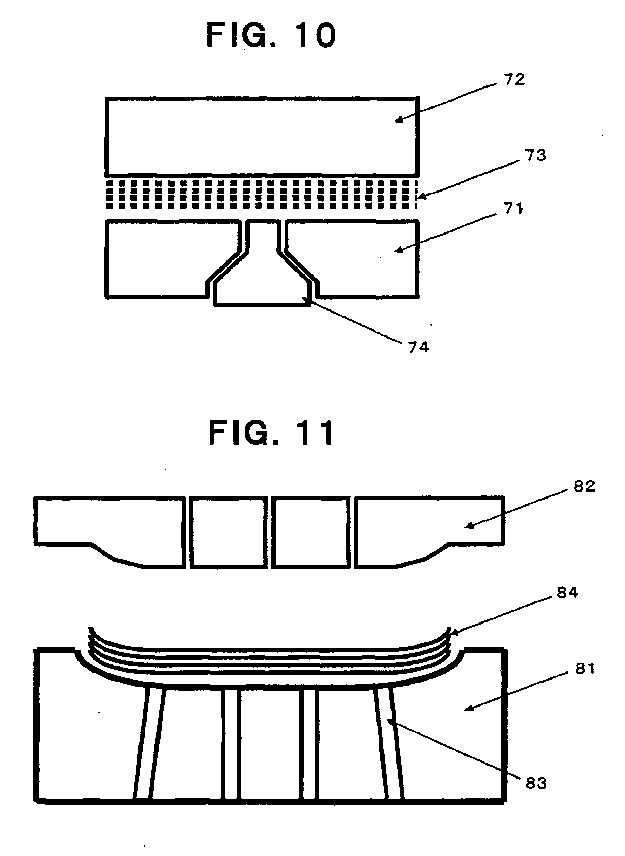

Further, in the embodiment shown in Fig. 10, differently from the heating by the electromagnetic induction as described above, laminate 73 to be formed by pressing is disposed between lower die 71 and upper die 72 and it is pressed and formed, at a condition being pressed, only the laminate 73 is targeted for heating due to the ultrasonic vibration by a ultrasonic vibration device 74 (in the figure, it is shown as a ultrasonic oscillator 74) attached to lower die 71, the aforementioned binder 2 or substrates 1 or both in the laminate 73 are directly heated, and the binder 2 is melted.

Further, in the embodiment shown in Fig. 11, as compared with the case shown in Fig. 10, among a forming die comprising lower die 81 and upper die 82 formed as divided dies, to lower die 81 a plurality of ultrasonic oscillators 83 are attached, and an oscillating end of each ultrasonic oscillator 83 is directed toward laminate 84 to be press formed. In such a structure, the amount of heating due to ultrasonic vibration can be appropriately controlled in accordance with each portion of laminate 84 becoming a target for heating, and more desirable heating condition can be achieved as the whole of laminate 84. Other structures are based upon those shown in Fig. 10.

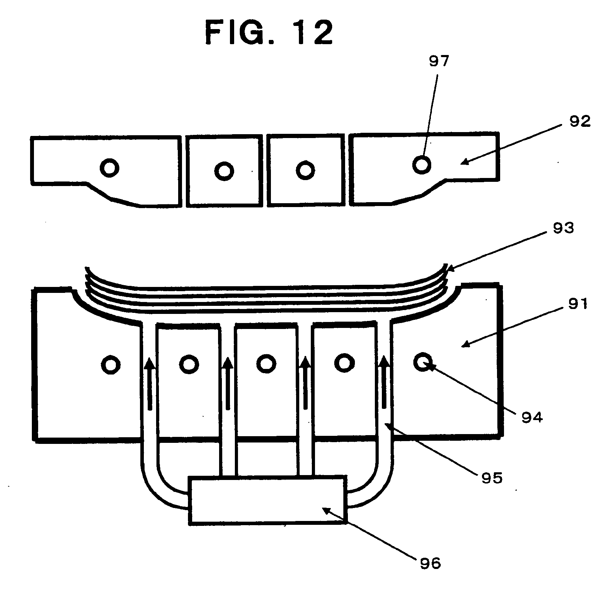

Furthermore, Fig. 12 shows an example of cooling embodiment in case where binder melted in the present invention is cooled and the substrates are adhered to each other between layers thereof to retain the formed shape. In the example shown in Fig. 12, laminate 93 is formed by pressing between lower die 91 and divided upper dies 92. With respect to cooling, for example, the cooling can be performed positively and forcibly by cooling medium (for example, liquid) communicated in a cooling medium flow path 94 provided in lower die 91 or cooling medium (for example, gas) capable of being jetted toward laminate 93 after being sent from a pump 96 into a cooling medium flow path 95 provided in lower die 91. Further, as the case may be, a similar cooling medium flow path 97 (for example, the cooling medium is liquid) may also be provided in the divided upper dies 92. By such a cooling system, it is possible to cool laminate 93 effectively. Further, in the present invention, because originally the forming die is not heated positively and it does not reach a high temperature condition, by performing such a forcible cooling, a necessary lowering of temperature can be performed quickly, and in particular in a case of continuous mass production, shortening of forming cycle time becomes possible, and it can contribute to increase the productivity.

### Industrial Applications of the Invention

The for manufacturing a preform according to the present invention can be applied to manufacture of any preform, in particular, requiring shortening of forming cycle time and efficient production.

### Explanation of symbols

1: reinforcing fiber substrate
2: binder
3: laminate
4: forming die
5: preform
6: molding die for RTM process
7: resin
8: FRP molded product
11: lower die
12: upper die
13: forming die
14: laminate
15: coil for electromagnetic induction
21: divided upper die
31: coil for electromagnetic induction
32: lower die
41: lower die
42: coil for electromagnetic induction
43: plate for forming
51: upper die
52: laminate
53: surface layer portion of upper die
54: base portion of upper die
55: lower die
56: surface layer portion of lower die
57: coil for electromagnetic induction
58: base portion of lower die
61: upper die
62: laminate
63: surface layer portion of upper die
64: base portion of upper die
65: lower die
66: surface layer portion of lower die
67: coil for electromagnetic induction
68: base portion of lower die
71: lower die
72: upper die
73: laminate
74: ultrasonic oscillator
81: lower die
82: divided upper die
83: ultrasonic oscillator
84: laminate
91: lower die
92: divided upper die
93: laminate
94, 95, 97: flow path for cooling medium
96: pump

## Claims

1. A method for manufacturing a preform wherein a plurality of substrates each prepared by affixing a binder whose main component is a thermoplastic resin to a reinforcing fiber fabric are laminated to form a laminate, and a preform which is a molding precursor of FRP is prepared by forming said laminate using a forming die, said preform being used in RTM process for placing said preform in a molding die, injecting a resin into said molding die, thereafter curing said resin, and obtaining an FRP molded product by opening said molding die, **characterized in that** said laminate is pressed into a predetermined shape by said forming die, said binder is melted by directly heating said binder or said substrates or both in said laminate at a condition being pressed, and is cooled thereafter to solidify said binder, and said substrates are adhered to each other between layers thereof to retain a formed shape of said preform.

2. The method for manufacturing a preform according to claim 1, wherein said substrates have a conductivity, and said substrates are directly heated by electromagnetic induction.

3. The method for manufacturing a preform according to claim 1 or 2, wherein said substrates contain fibers having a conductivity, and said substrates are directly heated by electromagnetic induction.

4. The method for manufacturing a preform according to claim 3, wherein said fibers having a conductivity comprise carbon fibers.

5. The method for manufacturing a preform according to any of claims 1 to 4, wherein said binder has a conductivity, and said binder is directly heated by electromagnetic induction.

6. The method for manufacturing a preform according to any of claims 2 to 5, wherein a forming die comprising a non-conductive material is used.

7. The method for manufacturing a preform according to claim 6, wherein said forming die comprises a non-metal.

8. The method for manufacturing a preform according to any of claims 2 to 7, wherein said heating by electromagnetic induction is performed using a coil for electromagnetic induction.

9. The method for manufacturing a preform according to claim 8, wherein a forming die provided with said coil for electromagnetic induction is used.

10. The method for manufacturing a preform according to claim 8 or 9, wherein a distance between a center of said coil and said laminate is in a range of 5 mm to 30 mm.

11. The method for manufacturing a preform according to any of claims 8 to 10, wherein a distance between centers of coil portions adjacent to each other in a part performed with said heating by electromagnetic induction of said coil is in a range of 5 mm to 60 mm.

12. The method for manufacturing a preform according to any of claims 1 to 11, wherein a glass transition temperature (Tg) of said binder is in a range of 50 to 80°C.

13. The method for manufacturing a preform according to any of claims 2 to 12, wherein at least one of an upper die and a lower die of said forming die is formed from at least three separable members comprising a surface layer portion which is positioned at the side of said laminate, a coil for electromagnetic induction which is disposed at a back surface side of said surface layer portion, and a base portion.

14. The method for manufacturing a preform according to claim 13, wherein said base portion of said forming die is made of a material having a heat resisting temperature higher than that of said surface layer portion of said forming die.

15. The method for manufacturing a preform according to claim 13 or 14, wherein said base portion of said forming die is made of a material having a heat resisting temperature of 200°C or higher.

16. The method for manufacturing a preform according to any of claims 1 to 15, wherein when said preform is prepared, after said laminate is heated, said binder is solidified by cooling said laminate by said forming die.

17. The method for manufacturing a preform according to claim 16, wherein a forming surface of said forming die is cooled by communicating a cooling medium in said forming die, and said laminate is cooled via cooling of said forming surface.

18. The method for manufacturing a preform according to any of claims 1 to 17, wherein cooling of said laminate is performed at a condition being pressed.

19. The method for manufacturing a preform according to any of claims 1 to 18, wherein at least one of an upper die and a lower die of said forming die is formed into divided dies, and each divided die is controlled with heating or cooling or both.

20. The method for manufacturing a preform according to any of claims 1, 16 to 19, wherein a ultrasonic vibration device is attached to said forming die, and said binder is melted by ultrasonically vibrating said binder or said substrates or both by said ultrasonic vibration device.

21. The method for manufacturing a preform according to claim 20, wherein said ultrasonic vibration device has a ultrasonic oscillator, and an oscillating end of said ultrasonic oscillator is directed toward said laminate.

22. A preform manufactured using a method according to any of claims 1 to 21.
